# EUROPÄISCHE PATENTANMELDUNG

(11) **EP 3 972 099 A1**
(43) Veröffentlichungstag der Anmeldung: **23.03.2022**
(21) Anmeldenummer: 21191216.7
(22) Anmeldetag: 13.08.2021
(51) Int. Cl.: H02K 29/08, H02K 29/12, H02K 29/14, H02K 1/14, H02K 3/32, H02K 3/34, H02K 1/278

(54) **WÄSCHEPFLEGEGERÄT MIT EINEM ELEKTRISCHEN SYNCHRONMOTOR**

(30) Priorität: 17.09.2020 DE 102020211671
(71) Anmelder: BSH Hausgeräte GmbH, 81739 München (DE)
(72) Erfinder: Albayrak, Hasan Gökcer, 14476 Potsdam (DE); Deckert, Patrick, 14943 Luckenwalde (DE); Genc, Kemal, 12347 Berlin (DE); Jahnke, Heiko, 16341 Panketal (DE)

(57) **Zusammenfassung**

Die vorliegende Erfindung betrifft ein Wäschepflegegerät (100) mit einem elektrischen Synchronmotor (109) zum Betrieben eines elektrischen Bauteils des Wäschepflegegeräts (100), wobei der elektrische Synchronmotor (109) einen Stator (115) mit mindestens drei Statorvorsprüngen (121) aufweist, wobei die Statorvorsprünge (121) jeweils eine Statorspule (123) zur Erzeugung eines rotierenden magnetischen Felds aufweisen, wobei der elektrische Synchronmotor (109) einen Rotor (117) mit mindestens drei Rotorpolen aufweist, und wobei der Rotor (117) durch das erzeugte rotierende magnetische Feld rotierbar ist, und einer Steuerung (111), welche mit dem elektrischen Synchronmotor (109) steuerungstechnisch verbunden ist, wobei der Stator (115) mindestens eine Ausnehmung (125) aufweist, welche umfangsseitig des Stators (115) zwischen zwei benachbarten Statorvorsprüngen (121) angeordnet ist, wobei die Ausnehmung (125) ausgebildet ist das durch den Stator (115) erzeugte rotierende magnetische Feld zu modifizieren, und/oder wobei der Rotor (117) eine Mehrzahl von Magnetelementen (131) aufweist, welche umfangsseitig des Rotors (117) jeweils zwischen zwei benachbarten Rotorpolen angeordnet sind, wobei die Magnetelemente (131) ausgebildet sind, das durch den Stator (115) erzeugte rotierende magnetische Feld zu modifizieren, wobei die Steuerung (111) ausgebildet ist, eine Rotationsposition des Rotors (117) basierend auf dem modifizierten rotierenden magnetischen Feld des Stators (115) zu bestimmen.

## Beschreibung

Die vorliegende Erfindung betrifft ein Wäschepflegegerät mit einem elektrischen Synchronmotor.

In einem herkömmlichen Wäschepflegegerät werden oftmals elektrische Synchronmotoren verwendet, um elektrische Bauteile des Wäschepflegegeräts, wie z.B. einen Trommelmotor zum Antreiben einer Wäschetrommel des Wäschepflegegeräts, zu betreiben. Ein entsprechender elektrischer Synchronmotor weist einen Stator mit Statorspulen auf, welche zur Erzeugung eines rotierenden Magnetfeldes ausgebildet sind. Durch das erzeugte rotierende Magnetfeld wird ein Rotor des elektrischen Synchronmotors in Rotation versetzt, wobei die Rotationsbewegung des Rotors auf das elektrische Bauteil übertragen werden kann, um dieses anzutreiben. In herkömmlichen elektrischen Synchronmotoren kann jedoch oftmals die Rotationsposition des Rotors nicht bestimmt werden.

Es ist die Aufgabe der vorliegenden Erfindung, ein Wäschepflegegerät mit einem elektrischen Synchronmotor zum Betreiben eines elektrischen Bauteils des Wäschepflegegeräts bereitstellen, wobei eine Rotationsposition des Rotors des elektrischen Synchronmotors vorteilhaft bestimmbar ist.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Gemäß einem ersten Aspekt wird die erfindungsgemäße Aufgabe durch ein Wäschepflegegerät gelöst, mit einem elektrischen Synchronmotor zum Betrieben eines elektrischen Bauteils des Wäschepflegegeräts, wobei der elektrische Synchronmotor einen Stator mit mindestens drei Statorvorsprüngen aufweist, wobei die Statorvorsprünge jeweils eine Statorspule zur Erzeugung eines rotierenden magnetischen Felds aufweisen, wobei der elektrische Synchronmotor einen Rotor mit mindestens drei Rotorpolen aufweist, und wobei der Rotor durch das erzeugte rotierende magnetische Feld rotierbar ist, und einer Steuerung, welche mit dem elektrischen Synchronmotor steuerungstechnisch verbunden ist, wobei der Stator mindestens eine Ausnehmung aufweist, welche umfangsseitig des Stators zwischen zwei benachbarten Statorvorsprüngen angeordnet ist, wobei die Ausnehmung ausgebildet ist das durch den Stator erzeugte rotierende magnetische Feld zu modifizieren, und/oder wobei der Rotor eine Mehrzahl von Magnetelementen aufweist, welche umfangsseitig des Rotors jeweils zwischen zwei benachbarten Rotorpolen angeordnet sind, wobei die Magnetelemente ausgebildet sind, das durch den Stator erzeugte rotierende magnetische Feld zu modifizieren, wobei die Steuerung ausgebildet ist, eine Rotationsposition des Rotors basierend auf dem modifizierten rotierenden magnetischen Feld des Stators zu bestimmen.

Dadurch wird der technische Vorteil erreicht, dass durch das Anordnen von Ausnehmungen an dem Umfang des Stators und/oder durch das Anordnen von Magnetelementen an dem Umfang des Rotors das durch den Stator erzeugte rotierende magnetische Feld vorteilhaft modifiziert werden kann, wobei die Steuerung basierend auf dem modifizierten rotierenden magnetischen Feld die Rotationsposition des Rotors bestimmen kann.

Insbesondere umfasst die zumindest eine Ausnehmung eine Mehrzahl von Ausnehmungen, wobei jeweils eine der Mehrzahl von Ausnehmungen zwischen zwei benachbarten Statorvorsprüngen angeordnet ist.

Das Bestimmen der Rotationsposition ermöglicht der Steuerung eine Vielzahl von Parametern des elektrischen Synchronmotors zu bestimmen, wie z.B. Rotorwinkel des Rotors, Drehzahl des Rotors, Ruheposition des Rotors, etc. Somit kann beispielsweise über den gesamten Drehzahlbereich des elektrischen Synchronmotors eine Drehzahlregelung erfolgen und es muss, wie bei herkömmlichen elektrischen Synchronmotoren oftmals üblich, der Synchronmotor nicht aus dem Stillstand heraus gesteuert angefahren werden.

Durch den Verzicht auf einen entsprechenden gesteuerten Betrieb beim Motoranlauf kann der Energiebedarf und die Motortemperatur des elektrischen Synchronmotors gemäß der vorliegenden Offenbarung vorteilhaft reduziert werden.

Zudem kann eine vorteilhafte Drehzahlregelung in einem sehr geringen Drehzahlbereich von beispielsweise weniger als 20 U/min auch bei Lastsprüngen sichergestellt werden, so dass z.B. bei der Verwendung eines entsprechenden elektrischen Synchronmotors in einem Trommelantrieb zum Antreiben einer Wäschetrommel des Wäschepflegegeräts bei empfindlichen Wäschestücken, die z.B. aus Wolle bestehen, ein besonders schonendes Wäschepflegeverfahren sichergestellt werden kann.

Zudem ermöglicht eine vorteilhafte Rotationspositionsbestimmung des elektrischen Synchronmotors der vorliegenden Offenbarung, z.B. bei der Verwendung in einem Trommelantrieb, eine exakte Ausrichtung der Rotationsposition, bzw. Rotationslage der Wäschetrommel, insbesondere in einem sehr geringen Drehzahlbereich, so dass eine besonders wirksame Benetzung, bzw. Wäschepflege der Wäsche in der Wäschetrommel sichergestellt werden kann.

Die vorliegende Offenbarung beruht auf der Erkenntnis, das durch den Stator des elektrischen Synchronmotors erzeugte rotierende magnetische Feld gezielt zu modifizieren. Dies kann entweder durch das Einführen von Ausnehmungen an dem Umfang des Stators oder durch das Einführen von Magnetelementen an dem Umfang des Rotors erfolgen, oder dies kann auch durch eine Kombination von entsprechenden Statorseitigen Ausnehmungen und entsprechenden Rotor-seitigen Magnetelementen erfolgen.

Die entsprechenden konstruktiven Änderungen des elektrischen Synchronmotors bedingen eine entsprechende Änderung des magnetischen Flusses innerhalb der entsprechenden Statorpole, welche wiederum die an dem elektrischen Synchronmotor anliegenden Motorströme beeinflusst.

Die an dem elektrischen Synchronmotor anliegenden und durch die Steuerung ausgewerteten Motorströme umfassen somit zwei Anteile, eine Grundmotorstrom, insbesondere Grundschwingung des erfassten elektrischen Leistungswerts, als ersten Anteil, und einen modifizierten Motorstrom, insbesondere Oberschwingung des erfassten elektrischen Leistungswerts, als zweiten Anteil.

Anhand der Auswertung des modifizierten Motorstroms, insbesondere Oberschwingung des erfassten elektrischen Leistungswerts, durch die Steuerung kann die Steuerung die Rotationslage des Rotors des elektrischen Synchronmotors bestimmen.

Die Steuerung kann eine entsprechende Auswertung beispielsweise durch einen Vergleich der bestimmten Motorströme mit hinterlegten Referenzdaten von entsprechenden modifizierten Motorströmen durchführen.

Auf diese Weise kann zeitnah und effektiv die Rotationsposition, bzw. Rotorlage des Rotors des elektrischen Synchronmotors durch die Steuerung bestimmt werden, wodurch eine vorteilhafte Steuerung einer Vielzahl von Parameter des elektrischen Synchronmotors ermöglicht wird.

Unter einem Wäschepflegegerät wird ein Gerät verstanden, welches zur Wäschepflege eingesetzt wird, wie z.B. eine Waschmaschine oder ein Wäschetrockner. Insbesondere wird unter solch einem Wäschepflegegerät ein Haushaltswäschepflegegerät verstanden. Also ein Wäschepflegegerät, welches im Rahmen der Haushaltsführung verwendet wird, und mit dem Wäsche in haushaltsüblichen Mengen behandelt wird.

In einer vorteilhaften Ausführungsform ist die Steuerung ausgebildet ist, einen elektrischen Leistungswert, insbesondere einen an dem Stator anliegenden Motorstrom des Stators, zu erfassen, um das modifizierte rotierende magnetischen Feld des Stators zu bestimmen.

Dadurch wird der technische Vorteil erreicht, dass der elektrische Leistungswert, insbesondere der an dem Stator anliegende Motorstrom, durch die Steuerung einfach und vorteilhaft erfasst werden. Aufgrund der Grundprinzipien des Elektromagnetismus besteht eine Korrelation zwischen dem durch die Statorspulen des Stators fließenden elektrischen Strom und dem dadurch erzeugten Magnetfeld, welches wiederum mit der Rotationsposition des Rotors korreliert ist. Somit kann anhand der Auswertung des elektrischen Leistungswertes, insbesondere des an dem Stator anliegenden Motorstroms, das rotierende magnetischen Feld des Stators vorteilhaft bestimmt werden.

In einer vorteilhaften Ausführungsform weist der erfasste elektrische Leistungswert, insbesondere Motorstrom des Stators, eine Schwingung auf, welche eine Grundschwingung, insbesondere Sinusschwingung, und eine Oberschwingung umfasst, wobei die Oberschwingung auf dem modifizierten rotierenden magnetischen Feld des Stators beruht, und wobei die Steuerung ausgebildet ist, basierend auf der Oberschwingung das modifizierte rotierende magnetischen Feld des Stators zu bestimmen.

Dadurch wird der technische Vorteil erreicht, dass durch die detaillierte Auswertung des elektrischen Leistungswerts, insbesondere Motorstrom des Stators, durch die Steuerung eine besonders wirksame Bestimmung der Rotationsposition des Rotors ermöglicht wird. Die mechanische Modifizierung des Stators durch die Ausnehmungen, und/oder die mechanische Modifizierung des Rotors durch die Magnetelemente, bewirkt eine definierte Veränderung des magnetischen Flusses in den Statorpolen, welche sich wiederum in dem elektrischen Leistungswert, insbesondere Motorstrom des Stators, wiederspiegelt.

Hierbei kann die Steuerung insbesondere eine Schwingung des elektrischen Leistungswerts detailliert auswerten und neben der Grundschwingung eine auf der mechanischen Modifizierung des Stators und/oder Rotors beruhende Oberschwingung auswerten. Insbesondere werden die überlagerten Frequenzanteile des elektrischen Leistungswerts, welche durch die mechanische Modifizierung des Stators und/oder Rotors bedingt sind auf die Grundschwingung aufmoduliert.

In einer vorteilhaften Ausführungsform ist der elektrische Synchronmotor als ein Permanentmagnet-erregter Synchronmotor (PMSM) ausgebildet, welcher insbesondere einen Stator und/oder Rotor aus einem permanentmagnetischen Material, insbesondere Eisen, aufweist.

Dadurch wird der technische Vorteil erreicht, dass ein Permanentmagnet-erregter Synchronmotor (PMSM) drehzahlvariabel betrieben werden kann, wodurch beispielsweise ein Trommelantrieb, bzw. eine Laugenpumpe des Wäschepflegegeräts mit unterschiedlichen Drehzahlen betrieben werden können.

In einer vorteilhaften Ausführungsform umfasst das elektrische Bauteil des Wäschepflegegeräts einen Trommelantrieb zum Rotieren einer Wäschetrommel des Wäschepflegegeräts und/oder eine Waschflüssigkeitspumpe zum Pumpen von Waschflüssigkeit aus einem Laugenbehälter des Wäschepflegegeräts, wobei der elektrische Synchronmotor ausgebildet ist, den Trommelantrieb zum Rotieren der Wäschetrommel und/oder die Pumpe zum Pumpen von Waschflüssigkeit zu betreiben.

Dadurch wird der technische Vorteil erreicht, dass die Bestimmung der Rotationsposition des Rotors insbesondere bei der Verwendung des elektrischen Synchronmotors in einem Trommelantrieb, bzw. einer Waschflüssigkeitspumpe von Vorteil ist, da neben der Energie- und Temperaturreduktion des Synchronmotors, auch ein Betrieb in einem sehr geringen Drehzahlbereich möglich ist, und zudem beispielsweise eine exakte Lageausrichtung der Wäschetrommel, z.B. während einer Benetzungsphase des Wäschepflegevorgangs, ermöglicht werden kann.

In einer vorteilhaften Ausführungsform ist der elektrische Synchronmotor ausgebildet, den Trommelantrieb zum Rotieren der Wäschetrommel zu betreiben, wobei die Steuerung ausgebildet ist, während eines Wäschepflegevorgangs, insbesondere Schleudervorgangs, des Wäschepflegegeräts basierend auf der bestimmten Rotorposition des Rotors eine Drehzahl, eine Rotationsrichtung und/oder eine Inversionsfrequenz der Wäschetrommel zu verändern, um den Wäschepflegevorgang zu optimieren.

Dadurch wird der technische Vorteil erreicht, dass eine besonders vorteilhafte Optimierung des Wäschepflegevorgangs, insbesondere Schleudervorgangs, sichergestellt werden kann.

In einer vorteilhaften Ausführungsform ist die Steuerung ausgebildet, basierend auf dem modifizierten rotierenden magnetischen Feld des Stators eine Drehzahl des Rotors zu bestimmen.

Dadurch wird der technische Vorteil erreicht, dass beispielsweise durch eine Auswertung einer Vielzahl von Motorströmen innerhalb eines bestimmten Zeitintervalls eine Drehzahl des Rotors besonders vorteilhaft bestimmt werden kann, wodurch Drehzahländerungen besonders vorteilhaft angesteuert und optimiert werden können.

In einer vorteilhaften Ausführungsform ist die Ausnehmung mittig oder versetzt zwischen zwei benachbarten Statorvorsprüngen angeordnet.

Dadurch wird der technische Vorteil erreicht, dass durch die mittige oder versetzte Anordnung der Ausnehmung zwischen zwei benachbarten Statorvorsprüngen eine definierte Modifizierung des modifizierten rotierenden magnetischen Felds des Stators erreicht werden kann.

Insbesondere umfasst die Ausnehmung eine Mehrzahl von Ausnehmungen, wobei jeweils eine der Mehrzahl von Ausnehmungen mittig oder versetzt zwischen zwei benachbarten Statorvorsprüngen angeordnet ist.

Insbesondere umfasst die Ausnehmung eine Mehrzahl von Ausnehmungen, welche mittig oder versetzt zwischen zwei benachbarten Statorvorsprüngen angeordnet sind, wobei insbesondere zwischen zumindest einem Paar aus benachbarten Statorvorsprüngen keine Ausnehmung vorhanden ist.

In einer vorteilhaften Ausführungsform ist zwischen zwei benachbarten Statorvorsprüngen jeweils eine einzige Ausnehmung und/oder eine Mehrzahl von Ausnehmungen angeordnet.

Dadurch wird der technische Vorteil erreicht, dass durch das Anordnen einer einzigen oder einer Mehrzahl von Ausnehmungen zwischen zwei benachbarten Statorvorsprüngen eine definierte Modifizierung des modifizierten rotierenden magnetischen Felds des Stators erreicht werden kann.

Insbesondere sind die Ausnehmungen alternierend, insbesondere in Bezug auf die Statormitte unregelmäßig, angeordnet.

In einer vorteilhaften Ausführungsform weist die Mehrzahl von Magnetelementen eine Mehrzahl von Hauptmagnetpolen auf, welche eine abwechselnde magnetische Polarität aufweisen.

Dadurch wird der technische Vorteil erreicht, dass durch die Hauptmagnetpole mit abwechselnder magnetischer Polarität eine wirksame Modifizierung des modifizierten rotierenden magnetischen Felds des Stators erreicht werden kann.

In einer vorteilhaften Ausführungsform weisen die Magnetelemente eine Mehrzahl von Kodiermagnetpolen auf, welche eine abwechselnde magnetische Polarität aufweisen, wobei die Kodiermagnetpole insbesondere an den Hauptmagnetpolen angeordnet sind.

Dadurch wird der technische Vorteil erreicht, dass durch die Kodiermagnetpole mit abwechselnder magnetischer Polarität eine wirksame Modifizierung des modifizierten rotierenden magnetischen Felds des Stators erreicht werden kann.

Insbesondere ist an jedem Hauptmagnetpol der Mehrzahl von Hauptmagnetpolen jeweils eine Mehrzahl von Kodiermagnetpolen angeordnet, welche eine abwechselnde magnetische Polarität aufweisen. Insbesondere ist an jedem Hauptmagnetpol der Mehrzahl von Hauptmagnetpolen jeweils eine ungerade Anzahl, insbesondere drei, von Kodiermagnetpolen angeordnet, welche eine abwechselnde magnetische Polarität aufweisen.

Insbesondere weist die Mehrzahl der Kodiermagnetpole, welche an einem einzigen Hauptmagnetpol der Mehrzahl von Hauptmagnetpolen angeordnet sind, die gleiche magnetische Polarität wie der Hauptmagnetpol auf.

In einer vorteilhaften Ausführungsform sind die Magnetelemente umfangsseitig des Rotors symmetrisch angeordnet sind.

Dadurch wird der technische Vorteil erreicht, dass eine definierte Modifizierung des modifizierten rotierenden magnetischen Felds des Stators erreicht werden kann.

In einer vorteilhaften Ausführungsform weist der elektrische Synchronmotor einen Magnetfeldsensor, insbesondere Hall-Sensor, auf, welcher ausgebildet ist, das modifizierte rotierende magnetische Feld des Stators zu bestimmen, und wobei die Steuerung ausgebildet ist, eine Rotationsposition des Rotors basierend auf dem modifizierten rotierenden magnetischen Feld des Stators zu bestimmen.

Dadurch wird der technische Vorteil erreicht, dass durch den Magnetfeldsensor, insbesondere Hall-Sensor, die Genauigkeit der Bestimmung des modifizierten rotierenden magnetischen Feld des Stators verbessert werden kann.

In einer vorteilhaften Ausführungsform weist der Magnetfeldsensor einen Flussleiter auf, welche insbesondere an einer Platine des elektrischen Synchronmotors angeordnet ist, wobei der Flussleiter ausgebildet ist, das modifizierte rotierende magnetische Feld des Stators zu erfassen.

Dadurch wird der technische Vorteil erreicht, dass ein besonders vorteilhaftes Erfassen des rotierenden magnetischen Felds des Stators ermöglicht wird.

Gemäß einem zweiten Aspekt wird die erfindungsgemäße Aufgabe durch ein Verfahren zum Bestimmen einer Rotationsposition eines Rotors eines elektrischen Synchronmotors in einem Wäschepflegegerät gelöst, wobei das Wäschepflegegerät den elektrischen Synchronmotor zum Betrieben eines elektrischen Bauteils des Wäschepflegegeräts aufweist, wobei der elektrische Synchronmotor einen Stator mit mindestens drei Statorvorsprüngen aufweist, wobei die Statorvorsprünge jeweils eine Statorspule zur Erzeugung eines rotierenden magnetischen Felds aufweisen, wobei der elektrische Synchronmotor einen Rotor mit mindestens drei Rotorpolen aufweist, und wobei der Rotor durch das erzeugte rotierende magnetische Feld rotierbar ist, und wobei das Wäschepflegegerät eine Steuerung aufweist, welche mit dem elektrischen Synchronmotor steuerungstechnisch verbunden ist, wobei der Stator mindestens eine Ausnehmung aufweist, welche umfangsseitig des Stators zwischen zwei benachbarten Statorvorsprüngen angeordnet ist, wobei die Ausnehmung ausgebildet ist das durch den Stator erzeugte rotierende magnetische Feld zu modifizieren, und/oder wobei der Rotor eine Mehrzahl von Magnetelementen aufweist, welche umfangsseitig des Rotors jeweils zwischen zwei benachbarten Rotorpolen angeordnet sind, wobei die Magnetelemente ausgebildet sind, das durch den Stator erzeugte rotierende magnetische Feld zu modifizieren, wobei das Verfahren den folgenden Verfahrensschritt aufweist, Bestimmen einer Rotationsposition des Rotors basierend auf dem modifizierten rotierenden magnetischen Feld des Stators durch die Steuerung.

Dadurch wird der technische Vorteil erreicht, dass ein vorteilhaftes Bestimmen der Rotationsposition des Rotors sichergestellt wird.

Weitere Ausführungsbeispiele werden Bezug nehmend auf die beiliegenden Zeichnungen erläutert. Es zeigen:
- Fig. 1: eine schematische Ansicht eines Wäschepflegegeräts mit einem elektrischen Synchronmotor gemäß einer Ausführungsform der vorliegenden Anmeldung;
- Fig. 2: eine perspektivische Ansicht eines elektrischen Synchronmotors eines Wäschepflegegeräts gemäß einer Ausführungsform der vorliegenden Anmeldung;
- Fig. 3: eine perspektivische Ansicht eines Stators eines elektrischen Synchronmotors gemäß einer Ausführungsform der vorliegenden Anmeldung;
- Fig. 4: eine perspektivische Ansicht eines weiteren Stators eines elektrischen Synchronmotors gemäß einer weiteren Ausführungsform der vorliegenden Anmeldung;
- Fig. 5: eine perspektivische Ansicht eines weiteren Stators eines elektrischen Synchronmotors gemäß einer weiteren Ausführungsform der vorliegenden Anmeldung;
- Fig. 6: eine perspektivische Ansicht eines Rotors eines elektrischen Synchronmotors gemäß einer weiteren Ausführungsform der vorliegenden Anmeldung;
- Fig. 7: eine perspektivische Ansicht von Magnetelementen eines Rotors eines elektrischen Synchronmotors gemäß der in Fig. 6 dargestellten Ausführungsform der vorliegenden Anmeldung;
- Fig. 8: eine perspektivische Ansicht eines elektrischen Synchronmotors mit einem Magnetfeldsensor gemäß einer weiteren Ausführungsform der vorliegenden Anmeldung; und
- Fig. 9: eine schematische Darstellung eines Verfahrens zum Bestimmen einer Rotationsposition eines Rotors eines elektrischen Synchronmotors in einem Wäschepflegegerät gemäß einer Ausführungsform der vorliegenden Anmeldung.

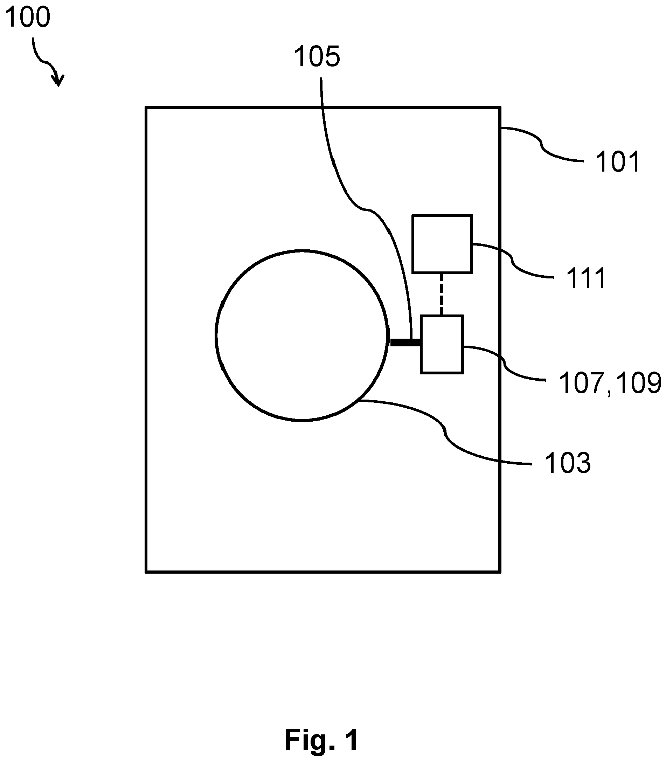

Fig. 1 zeigt eine schematische Ansicht eines Wäschepflegegeräts mit einem elektrischen Synchronmotor gemäß einer Ausführungsform der vorliegenden Anmeldung.

Innerhalb eines Gerätegehäuses 101 des Wäschepflegegeräts 100 ist eine Wäschetrommel 103 zur Aufnahme von Wäsche angeordnet, wobei die Wäschetrommel 103 durch eine Antriebswelle 105 mit einem Trommelantrieb 107 des Wäschepflegegeräts 100 verbunden ist. Der Trommelantrieb 107 ist ausgebildet die Wäschetrommel 103 zu rotieren und weist einen elektrischen Synchronmotor 109 zum Betreiben des Trommelantriebs 107 auf.

Eine Steuerung 111 des Wäschepflegegeräts 100 ist steuerungstechnisch mit dem elektrischen Synchronmotor 109 verbunden.

Alternativ oder zusätzlich kann eine in Fig. 1 nicht dargestellte Waschflüssigkeitspumpe zum Pumpen von Waschflüssigkeit aus einem in Fig. 1 nicht dargestellten Laugenbehälter des Wäschepflegegeräts 100 einen elektrischen Synchronmotor 109 aufweisen, welcher ausgebildet ist, die Waschflüssigkeitspumpe zum Pumpen von Waschflüssigkeit zu betreiben.

Somit ist ein elektrischer Synchronmotor 109 gemäß der vorliegenden Offenbarung ausgebildet ein elektrisches Bauteil des Wäschepflegegeräts 100 zu betreiben, wobei das elektrische Bauteil insbesondere einen Trommelantrieb 107 und/oder eine Waschflüssigkeitspumpe des Wäschepflegegeräts 100 umfasst.

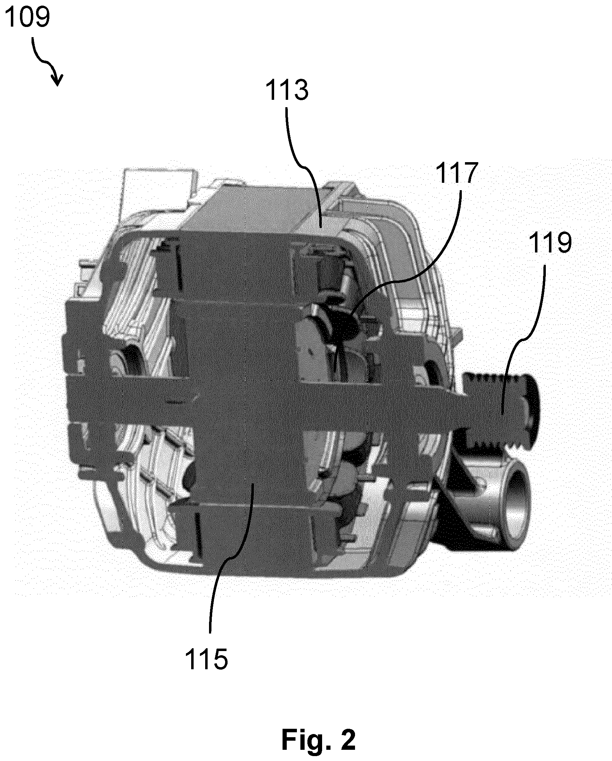

Fig. 2 zeigt eine perspektivische Ansicht eines elektrischen Synchronmotors eines Wäschepflegegeräts gemäß einer Ausführungsform der vorliegenden Anmeldung.

Der in einer Querschnittsansicht dargestellte elektrische Synchronmotor 109 weist innerhalb des Motorgehäuses 113 einen unbeweglichen Stator 115 und einen rotierbaren Rotor 117, sowie eine mit dem Rotor 117 verbundene Motorwelle 119 auf. Der Stator 115 erzeugt ein rotierendes magnetisches Feld, welches den Rotor 117 zur Rotation antreibt.

Der elektrische Synchronmotor 109 ist insbesondere als ein Permanentmagnet-erregter Synchronmotor 109 (PMSM) ausgebildet, welcher Drehzahl-variabel geregelt wird. Insbesondere ist ein Ziel der vorliegenden Offenbarung auf Basis einer Reluktanz des Permanentmagnet-erregten Synchronmotors 109, die Lage des Rotors 117 im Stillstand zu bestimmen.

Für weitere strukturelle und funktionelle Details wird auf die nachfolgenden Ausführungen verwiesen.

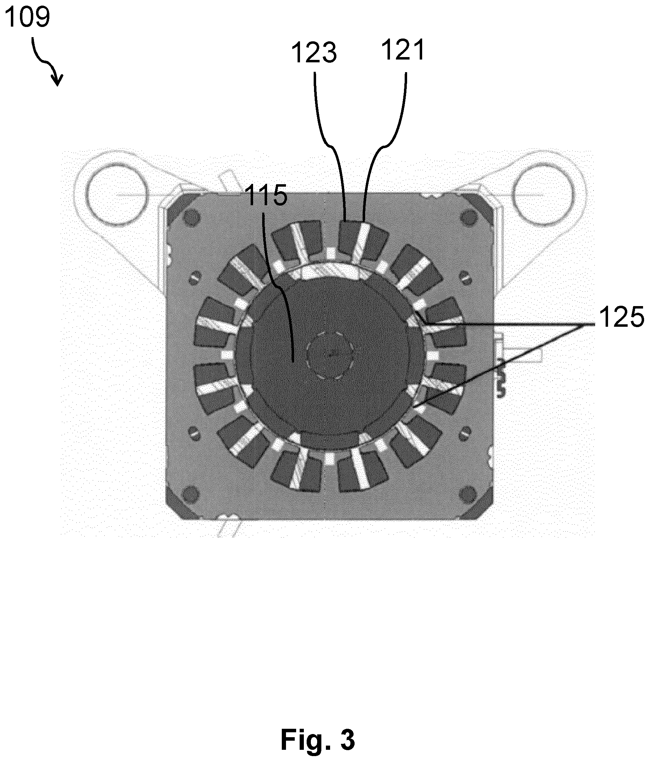

Fig. 3 zeigt eine perspektivische Ansicht eines Stators eines elektrischen Synchronmotors gemäß einer Ausführungsform der vorliegenden Anmeldung.

Der in Fig. 3 dargestellte Stator 115 weist eine Mehrzahl von Statorvorsprüngen 121, insbesondere zwölf Statorvorsprünge 121 auf, wobei die Statorvorsprünge 121 jeweils eine Statorspule 123 zur Erzeugung eines rotierenden magnetischen Felds aufweisen.

Der Stator 115 weist ferner mindestens eine Ausnehmung 125 auf, welche umfangsseitig des Stators 115 zwischen zwei benachbarten Statorvorsprüngen 121 angeordnet ist. Insbesondere weist der Stator 115 zwölf Ausnehmungen 125 auf, wobei jeweils einer der zwölf Ausnehmungen 125 zwischen zwei benachbarten Statorvorsprüngen 121 angeordnet ist. Auch wenn dies in der Fig. 3 nicht dargestellt ist, kann auch optional zwischen zwei benachbarten Statorvorsprüngen 121 keine Ausnehmung 125 angeordnet sein.

Die Ausnehmungen 125 sind insbesondere als Längsschlitze ausgebildet.

Auch wenn die Ausnehmungen 125 gemäß der Fig. 3 einen quaderförmigen Querschnitt aufweisen, können die Ausnehmungen 125 alternativ auch einen dreieckigen, runden, insbesondere halbkreisförmigen, oder mehreckigen, insbesondere viereckigen, Querschnitt aufweisen.

Durch das Einführen der Ausnehmung 125 umfangsseitig des Stators 115 zwischen den Statorvorsprüngen 121 wird eine Änderung des magnetischen Flusses innerhalb eines Statorpols verändert, was wiederum eine Modifizierung der an dem Stator 115 anliegenden Motorströme bewirkt.

Die an dem Stator 115 anliegenden Motorströme weisen hierbei insbesondere eine Schwingung aufweist, welche eine Grundschwingung, insbesondere Sinusschwingung, und eine Oberschwingung umfasst, wobei die Oberschwingung auf dem durch Ausnehmungen 125 modifizierten rotierenden magnetischen Feld des Stators 115 beruht.

Die in Fig. 1 nicht dargestellte Steuerung 111 kann auf Basis der Oberschwingung der Motorströme des Stators 115, welche auf dem durch die Ausnehmungen 125 modifizierten rotierenden magnetischen Feld des Stators 115 beruhen, eine Rotorlage des Rotors 117 des elektrischen Synchronmotors 109 bestimmen. Auf Basis der bestimmten Rotorlage des Rotors 117 kann die Steuerung 111 die Drehzahl des elektrischen Synchronmotors 109 bestimmen.

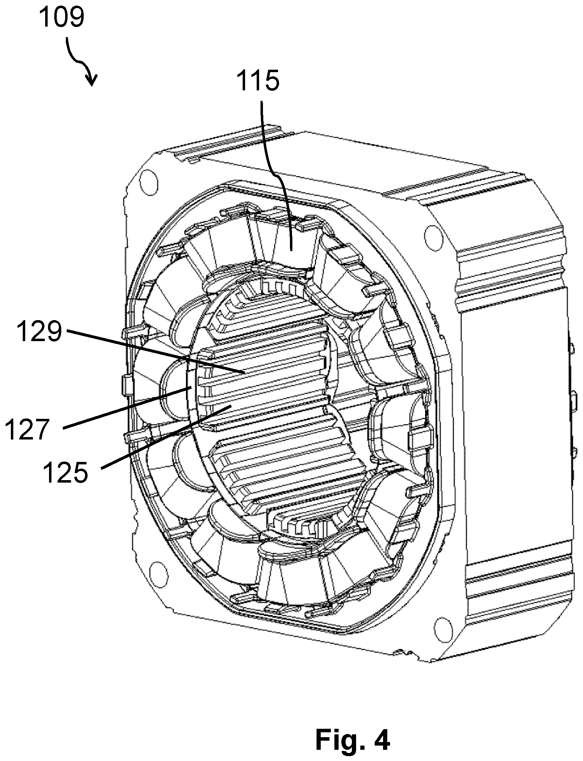

Fig. 4 zeigt eine perspektivische Ansicht eines weiteren Stators eines elektrischen Synchronmotors gemäß einer weiteren Ausführungsform der vorliegenden Anmeldung.

Fig. 4 zeigte eine schematische Ansicht von verschiedenen Statorpolen 127 des Stators 115, wobei an jedem Statorpol 127 eine Mehrzahl von Ausnehmungen 125, insbesondere Längsschlitze, angeordnet sind, so dass sich an dem jeweiligen Statorpol 127 eine Mehrzahl von Erhebungen 129, insbesondere Längszähne, bilden.

Insbesondere sind an jedem Statorpol 127 jeweils fünf Ausnehmungen 125, insbesondere Längsschlitze 125, und sechs Erhebungen 129, insbesondere Längszähne, angeordnet.

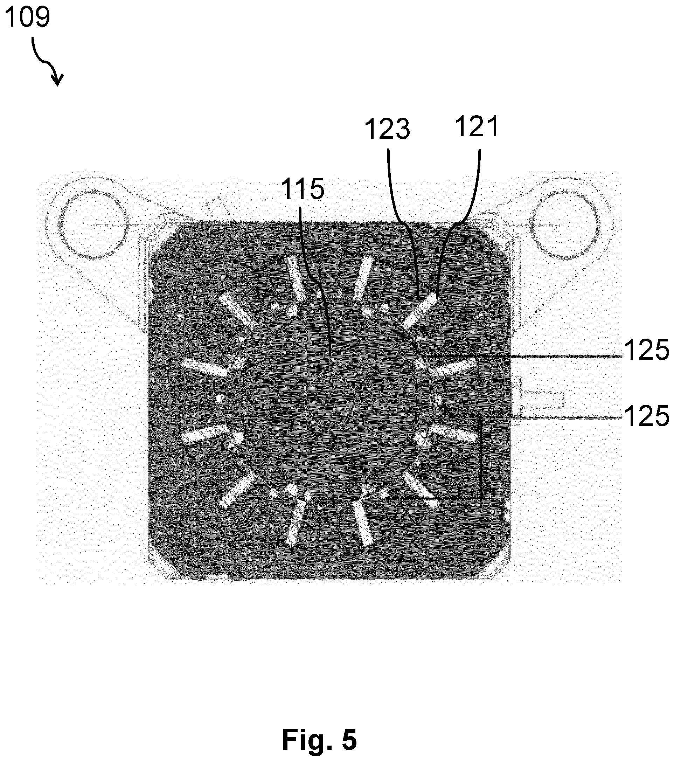

Fig. 5 zeigt eine perspektivische Ansicht eines weiteren Stators eines elektrischen Synchronmotors gemäß einer weiteren Ausführungsform der vorliegenden Anmeldung.

Der in Fig. 5 dargestellte weitere Stator 115 entspricht dem in Fig. 3 dargestellten Stator 115 bis darauf, dass umfangsseitig an dem Stator 115 abwechselnd jeweils ein und dann zwei oder mehrere Ausnehmungen 125 angeordnet sind.

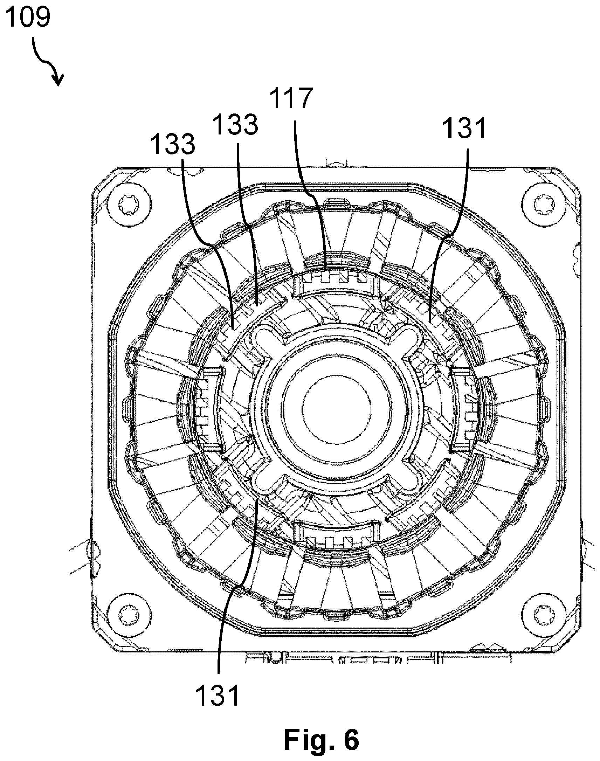

Fig. 6 zeigt eine perspektivische Ansicht eines Rotors eines elektrischen Synchronmotors gemäß einer weiteren Ausführungsform der vorliegenden Anmeldung.

Der in Fig. 6 dargestellte Rotor 117 weist umfangsseitig eine Mehrzahl von Magnetelementen 131 auf, welche insbesondere symmetrisch an dem Rotor 117 angeordnet sind.

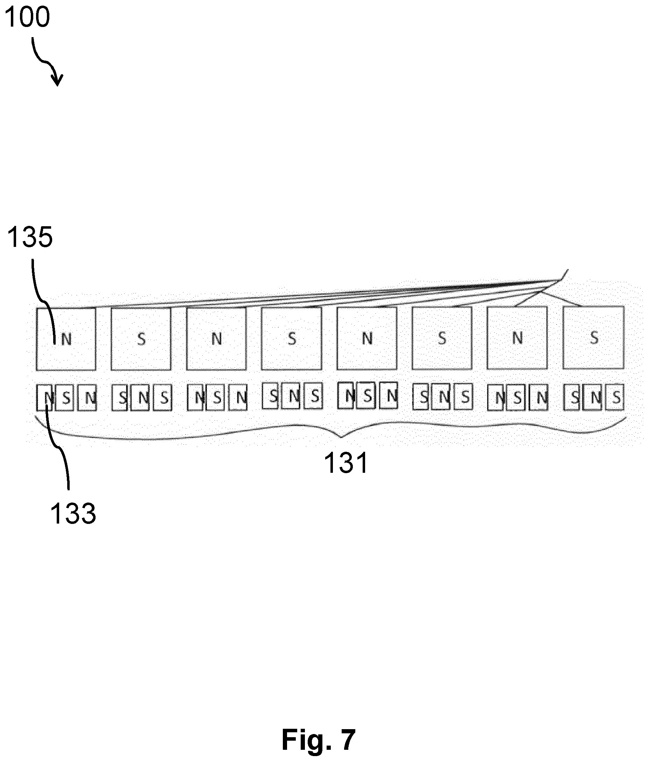

Durch die Magnetelemente 131 des Rotors 117 wird auch hier eine Modifizierung des magnetischen Flusses in dem elektrischen Synchronmotor 109 erreicht, wobei insbesondere der Stator 115 hierbei unverändert bleibt, d.h. keine Ausnehmungen 125 aufweist. Insbesondere kann, wie in der Fig. 7 im Details dargestellt ist, durch an den Magnetelementen 131 angeordnete Kodiermagnetpole 133, das magnetische Feld entsprechend modifiziert werden.

Analog zu der bereits in Bezug auf den Stator 115 ausgeführten Modifizierung des magnetischen Felds kann auch basierend auf der durch den Rotor 117 ausgeführten Modifizierung des magnetischen Felds durch die Steuerung 111 die Rotorlage des Rotors 117 bestimmt werden.

Fig. 7 zeigt eine perspektivische Ansicht von Magnetelementen eines Rotors eines elektrischen Synchronmotors gemäß der in Fig. 6 dargestellten Ausführungsform der vorliegenden Anmeldung.

Die Magnetelemente 131 weisen eine Mehrzahl von Kodiermagnetpolen 133 auf, welche eine abwechselnde magnetische Polarität aufweisen, wobei die Kodiermagnetpole 133 insbesondere an Hauptmagnetpolen 135 des Magnetelements 131 angeordnet sind.

Insbesondere weist die Mehrzahl der Kodiermagnetpole 133 die gleiche magnetische Polarität wie der entsprechende Hauptmagnetpol 135 auf.

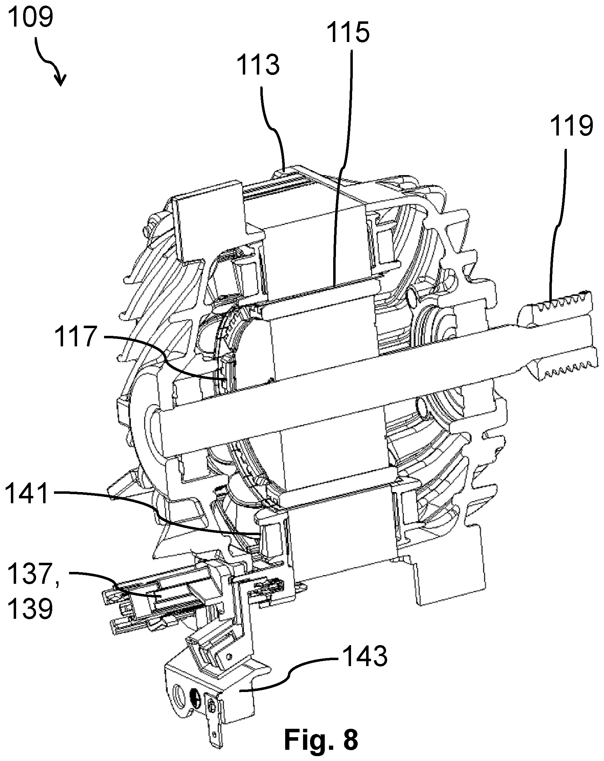

Fig. 8 zeigt eine perspektivische Ansicht eines elektrischen Synchronmotors mit einem Magnetfeldsensor gemäß einer weiteren Ausführungsform der vorliegenden Anmeldung.

Wie aus der Fig. 8 hervorgeht, weist der elektrische Synchronmotor 109 einen Magnetfeldsensor 137 auf, welche insbesondere in einer Aufnahme 139 einer Platine des elektrischen Synchronmotors 109 angeordnet ist. Der Magnetfeldsensor 137 weist einen Flussleiter 141 auf, welcher in einer magnetischen Wechselwirkung mit den seitlichen Magneten des Rotors 117 steht, um das modifizierte rotierende magnetische Feld des Stators 115 zu erfassen, um dadurch die Rotationsposition des Rotors 117 zu erfassen.

Ferner weist der elektrische Synchronmotor 109 noch einen Motorstecker 143 auf.

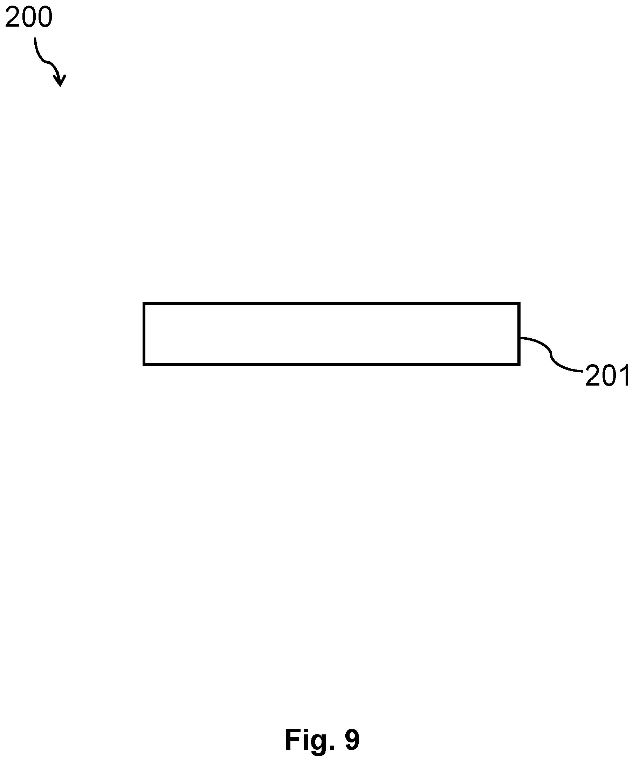

Fig. 9 zeigt eine schematische Darstellung eines Verfahrens zum Bestimmen einer Rotationsposition eines Rotors eines elektrischen Synchronmotors in einem Wäschepflegegerät gemäß einer Ausführungsform der vorliegenden Anmeldung.

Das Verfahren 200 weist den folgenden Verfahrensschritt auf, Bestimmen 201 einer Rotationsposition des Rotors 117 basierend auf dem modifizierten rotierenden magnetischen Feld des Stators 115 durch die Steuerung 111.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Wäschepflegegerät
- 101: Gerätegehäuse
- 103: Wäschetrommel
- 105: Antriebswelle
- 107: Trommelantrieb
- 109: Elektrischer Synchronmotor
- 111: Steuerung
- 113: Motorgehäuse
- 115: Stator
- 117: Rotor
- 119: Motorwelle
- 121: Statorvorsprung
- 123: Statorspule
- 125: Ausnehmung
- 127: Statorpol
- 129: Erhebung
- 131: Magnetelemente
- 133: Kodiermagnetpole
- 135: Hauptmagnetpole
- 137: Magnetfeldsensor
- 139: Platine
- 141: Flussleiter
- 143: Motorstecker

## Patentansprüche

1. Wäschepflegegerät (100) mit einem elektrischen Synchronmotor (109) zum Betrieben eines elektrischen Bauteils des Wäschepflegegeräts (100), wobei der elektrische Synchronmotor (109) einen Stator (115) mit mindestens drei Statorvorsprüngen (121) aufweist, wobei die Statorvorsprünge (121) jeweils eine Statorspule (123) zur Erzeugung eines rotierenden magnetischen Felds aufweisen, wobei der elektrische Synchronmotor (109) einen Rotor (117) mit mindestens drei Rotorpolen aufweist, und wobei der Rotor (117) durch das erzeugte rotierende magnetische Feld rotierbar ist, und einer Steuerung (111), welche mit dem elektrischen Synchronmotor (109) steuerungstechnisch verbunden ist, **dadurch gekennzeichnet, dass** der Stator (115) mindestens eine Ausnehmung (125) aufweist, welche umfangsseitig des Stators (115) zwischen zwei benachbarten Statorvorsprüngen (121) angeordnet ist, wobei die Ausnehmung (125) ausgebildet ist das durch den Stator (115) erzeugte rotierende magnetische Feld zu modifizieren, und/oder
dass der Rotor (117) eine Mehrzahl von Magnetelementen (131) aufweist, welche umfangsseitig des Rotors (117) jeweils zwischen zwei benachbarten Rotorpolen angeordnet sind, wobei die Magnetelemente (131) ausgebildet sind, das durch den Stator (115) erzeugte rotierende magnetische Feld zu modifizieren,
wobei die Steuerung (111) ausgebildet ist, eine Rotationsposition des Rotors (117) basierend auf dem modifizierten rotierenden magnetischen Feld des Stators (115) zu bestimmen.

2. Wäschepflegegerät (100) nach Anspruch 1, wobei die Steuerung (111) ausgebildet ist, einen elektrischen Leistungswert, insbesondere einen an dem Stator (115) anliegenden Motorstrom des Stators (115), zu erfassen, um das modifizierte rotierende magnetischen Feld des Stators (115) zu bestimmen.

3. Wäschepflegegerät (100) nach Anspruch 2, wobei der erfasste elektrische Leistungswert, insbesondere Motorstrom des Stators (115), eine Schwingung aufweist, welche eine Grundschwingung, insbesondere Sinusschwingung, und eine Oberschwingung umfasst, wobei die Oberschwingung auf dem modifizierten rotierenden magnetischen Feld des Stators (115) beruht, und wobei die Steuerung (111) ausgebildet ist, basierend auf der Oberschwingung das modifizierte rotierende magnetischen Feld des Stators (115) zu bestimmen.

4. Wäschepflegegerät (100) nach einem der vorangehenden Ansprüche, wobei der elektrische Synchronmotor (109) als ein Permanentmagnet-erregter Synchronmotor (PMSM) (109) ausgebildet ist, welcher insbesondere einen Stator (115) und/oder Rotor (117) aus einem permanentmagnetischen Material, insbesondere Eisen, aufweist.

5. Wäschepflegegerät (100) nach einem der vorangehenden Ansprüche, wobei das elektrische Bauteil des Wäschepflegegeräts (100) einen Trommelantrieb (107) zum Rotieren einer Wäschetrommel (103) des Wäschepflegegeräts (100) und/oder eine Waschflüssigkeitspumpe zum Pumpen von Waschflüssigkeit aus einem Laugenbehälter des Wäschepflegegeräts (100) umfasst, wobei der elektrische Synchronmotor (109) ausgebildet ist, den Trommelantrieb (107) zum Rotieren der Wäschetrommel (103) und/oder die Pumpe zum Pumpen von Waschflüssigkeit zu betreiben.

6. Wäschepflegegerät (100) nach Anspruch 5, wobei der elektrische Synchronmotor (109) ausgebildet ist, den Trommelantrieb (107) zum Rotieren der Wäschetrommel (103) zu betreiben, wobei die Steuerung (111) ausgebildet ist, während eines Wäschepflegevorgangs, insbesondere Schleudervorgangs, des Wäschepflegegeräts (100) basierend auf der bestimmten Rotorposition des Rotors (117) eine Drehzahl, eine Rotationsrichtung und/oder eine Inversionsfrequenz der Wäschetrommel (103) zu verändern, um den Wäschepflegevorgang zu optimieren.

7. Wäschepflegegerät (100) nach einem der vorangehenden Ansprüche, wobei die Steuerung (111) ausgebildet ist, basierend auf modifizierten rotierenden magnetischen Feld des Stators (115) eine Drehzahl des Rotors (117) zu bestimmen.

8. Wäschepflegegerät (100) nach einem der vorangehenden Ansprüche, wobei die Ausnehmung (125) mittig oder versetzt zwischen zwei benachbarten Statorvorsprüngen (121) angeordnet ist.

9. Wäschepflegegerät (100) nach einem der vorangehenden Ansprüche, wobei zwischen zwei benachbarten Statorvorsprüngen (121) jeweils eine einzige Ausnehmung (125) und/oder eine Mehrzahl von Ausnehmungen (125) angeordnet ist.

10. Wäschepflegegerät (100) nach einem der vorangehenden Ansprüche, wobei die Mehrzahl von Magnetelementen (131) eine Mehrzahl von Hauptmagnetpolen (135) aufweisen, welche eine abwechselnde magnetische Polarität aufweisen.

11. Wäschepflegegerät (100) nach Anspruch 10, wobei die Magnetelemente (131) eine Mehrzahl von Kodiermagnetpolen (133) aufweisen, welche eine abwechselnde magnetische Polarität aufweisen, wobei die Kodiermagnetpole (133) insbesondere an den Hauptmagnetpolen (135) angeordnet sind.

12. Wäschepflegegerät (100) nach einem der vorangehenden Ansprüche, wobei die Magnetelemente (131) umfangsseitig des Rotors (117) symmetrisch angeordnet sind.

13. Wäschepflegegerät (100) nach einem der vorangehenden Ansprüche, wobei der elektrische Synchronmotor (109) einen Magnetfeldsensor (137), insbesondere Hall-Sensor, aufweist, welcher ausgebildet ist, das modifizierte rotierende magnetische Feld des Stators (115) zu bestimmen, und wobei die Steuerung (111) ausgebildet ist, eine Rotationsposition des Rotors (117) basierend auf dem modifizierten rotierenden magnetischen Feld des Stators (115) zu bestimmen.

14. Wäschepflegegerät (100) nach Anspruch 13, wobei der Magnetfeldsensor (137) einen Flussleiter (141) aufweist, welche insbesondere an einer Platine (139) des elektrischen Synchronmotors (109) angeordnet ist, wobei der Flussleiter (141) ausgebildet ist, das modifizierte rotierende magnetische Feld des Stators (115) zu erfassen.

15. Verfahren (200) zum Bestimmen einer Rotationsposition eines Rotors (117) eines elektrischen Synchronmotors (109) in einem Wäschepflegegerät (100), wobei das Wäschepflegegerät (100) den elektrischen Synchronmotor (109) zum Betrieben eines elektrischen Bauteils des Wäschepflegegeräts (100) aufweist, wobei der elektrische Synchronmotor (109) einen Stator (115) mit mindestens drei Statorvorsprüngen (121) aufweist, wobei die Statorvorsprünge (121) jeweils eine Statorspule (123) zur Erzeugung eines rotierenden magnetischen Felds aufweisen, wobei der elektrische Synchronmotor (109) einen Rotor (117) mit mindestens drei Rotorpolen aufweist, und wobei der Rotor (117) durch das erzeugte rotierende magnetische Feld rotierbar ist, und wobei das Wäschepflegegerät (100) eine Steuerung (111) aufweist, welche mit dem elektrischen Synchronmotor (109) steuerungstechnisch verbunden ist, wobei der Stator (115) mindestens eine Ausnehmung (125) aufweist, welche umfangsseitig des Stators (115) zwischen zwei benachbarten Statorvorsprüngen (121) angeordnet ist, wobei die Ausnehmung (125) ausgebildet ist das durch den Stator (115) erzeugte rotierende magnetische Feld zu modifizieren, und/oder wobei der Rotor (117) eine Mehrzahl von Magnetelementen (131) aufweist, welche umfangsseitig des Rotors (117) jeweils zwischen zwei benachbarten Rotorpolen angeordnet sind, wobei die Magnetelemente (131) ausgebildet sind, das durch den Stator (115) erzeugte rotierende magnetische Feld zu modifizieren, **dadurch gekennzeichnet, dass** das Verfahren (200) den folgenden Verfahrensschritt aufweist,
Bestimmen (201) einer Rotationsposition des Rotors (117) basierend auf dem modifizierten rotierenden magnetischen Feld des Stators (115) durch die Steuerung (111).
